# EUROPÄISCHE PATENTSCHRIFT

(11) **EP 1 353 818 B1**
(45) Veröffentlichungstag und Bekanntmachung des Hinweises auf die Patenterteilung: **15.12.2004**
(21) Anmeldenummer: 02700156.9
(22) Anmeldetag: 18.01.2002
(51) Int. Cl.: B60K 15/077, B60K 15/03

(54) **EINRICHTUNG ZUR DURCHFÜHRUNG VON ELEKTRISCHEN LEITUNGEN DURCH DIE WANDUNG EINES KRAFTSTOFFBEHÄLTERS**
DEVICE FOR DUCTING ELECTRICAL LINES THROUGH THE WALL OF A FUEL TANK
DISPOSITIF POUR FAIRE PASSER DES FILS ELECTRIQUES A TRAVERS LA PAROI D'UN RESERVOIR DE CARBURANT

(30) Priorität: 25.01.2001 DE 10117976
(43) Veröffentlichungstag der Anmeldung: 22.10.2003
(73) Patentinhaber: Siemens Aktiengesellschaft, 80333 München (DE)
(72) Erfinder: GENSERT, Heiko, 65817 Eppstein (DE); HAGIST, Dieter, 56112 Lahnstein (DE); SINZ, Wolfgang, 65843 Sulzbach (DE)
(86) Internationale Anmeldenummer: PCT/DE2002/000144
(87) Internationale Veröffentlichungsnummer: WO 2002/058954

(56) Entgegenhaltungen:
- EP-A- 0 747 592
- EP-A- 0 964 229
- DE-A- 19 701 246
- DE-U- 29 918 994
- GB-A- 1 107 297
- US-A- 3 092 290
- US-A- 5 886 266

## Beschreibung

Die Erfindung betrifft eine Einrichtung zur Durchführung von elektrischen Leitungen durch die Wandung eines Kraftstoffbehälters, mit einem in eine Öffnung des Kraftstoffbehälters eingesetzten und diese sichtend abschließenden Träger und mit durch den Träger zu der Außenseite des Kraftstoffbehälters durchgeführten Kontakten, wobei der Träger zumindest eine aus Glas oder Keramik gefertigte Ummantelung für die Kontakte hat.

Solche Einrichtungen werden beispielsweise für eine Kraftstoffpumpe und einen Vorratsgeber häufig eingesetzt und sind aus der Praxis bekannt. In der Regel ist der Träger aus Kunststoff gefertigt. Die Kontakte werden in den Träger eingedrückt, bis auf beiden Seiten des Trägers jeweils ein Ende der Kontakte übersteht, oder die Kontakte werden bei der Herstellung des Trägers umspritzt und sind dadurch im Trägermaterial stoffschlüssig eingebettet. Anschließend lassen sich auf beiden Seiten des Trägers elektrische Leitungen mit den Kontakten verbinden. Der Träger wird beispielsweise auf die Öffnung des Kraftstoffbehälters verklippst. Zwischen dem Kraftstoffbehälter und dem Träger ist zudem eine Elastomerdichtung angeordnet.

Nachteilig bei der bekannten Einrichtung ist, dass Kraftstoffdämpfe durch den Träger und an den Kontakten angrenzenden Bereichen diffundieren können. Hierdurch kann Kraftstoff aus dem Kraftstoffbehälter in die Umgebung gelangen. Zur Vermeidung eines Austretens von Kraftstoff aus einem Block-Kraftstoffbehälter ist es aus der gattungsbildenden DE 299 18 994 U1 bereits bekannt, innerhalb und außerhalb es Kraftstoffbehälters angeordnete Kontakte über elektrische Leitungen miteinander zu verbinden und die elektrischen Leitungen mit einem permeationsdichten Material, wie beispielsweise Keramik oder Glas zu umschließen. Hierdurch lässt sich ein Entweichen von Kraftstoff durch den Träger besonders gering halten, da Glas oder Keramik eine Diffusion von Kraftstoffdämpfen nahezu vollständig unterbinden. Weiterhin stellt die Ummantelung eine ausreichende Isolation der Kontakte sicher. Diese Durchführung der elektrischen Leitungen ist jedoch sehr aufwändig. Weiterhin müssen die Leitungen aus einem Material mit einem hohen Schmelzpunkt gefertigt werden, da sie ansonsten beim Umschließen, beispielsweise mit Glas, angeschmolzen werden.

Aus der US 3,092,290 ist eine elektrische Verbindung durch die Wandung eines Kraftstoffbehälters bekannt geworden, bei der ein Stift die Wandung des Kraftstoffbehälters im Bereich einer Buchse durchdringt. Der ringförmige Zwischenraum zwischen der Buchse und dem Stift ist mit Glas ausgefüllt. Auch bei dieser Verbindung muss der Stift aus einem Material mit einem hohen Schmelzpunkt gefertigt. werden.

Der Erfindung liegt das Problem zugrunde, eine Einrichtung der eingangs genannten Art so zu gestalten, dass sie eine besonders hohe Dichtheit des Trägers und der Kontakte gewährleistet und dass die Kontakte aus einem nahezu beliebigen Material gefertigt werden können. Dieses Problem wird bei der eingangs genannten Einrichtung erfindungsgemäß dadurch gelöst, dass die Kontakte im Bereich ihrer Ummantelung eine Buchse aus Stahl aufweisen.

Durch diese Gestaltung lässt sich ein Anschmelzen der Kontakte bei einem Vergießen der Ummantelung mit Glas einfach vermeiden. Die innerhalb der Buchse ans Stahl angeordneten Kontakte können in der Buchse verpresst oder mit dieser verlötet werden. Diese Verbindung der Buchse mit den Kontakten lässt sich hierdurch einfach gasdicht gestalten. Dank der Erfindung lassen sich Kontakte aus einem Material mit einem niedrigeren Schmelzpunkt als Glas einsetzen. Die Kontakte können zudem unterschiedliche Querschnitte, z. B. kreisförmig, oval oder rechteckig aufweisen.

Der Träger könnte beispielsweise vollständig aus Keramik gefertigt sein. Der Träger gestaltet sich gemäß einer vorteilhaften Weiterbildung der Erfindung besonders kostengünstig, wenn er aus Metall gefertigt und mit der Ummantelung der Kontakte gasdicht verbunden ist. Insbesondere bei einer Verbindung des Trägers mit einem Kraftstoffbehälter mit einer Wandung aus Metall lassen sich dank der Erfindung Emissionen von Kraftstoff aus dem Kraftstoffbehälter auf nahezu null reduzieren.

Mehrere Kontakte könnten eine gemeinsame Ummantelung aus Glas oder Keramik aufweisen. Der Träger hat jedoch gemäß einer anderen vorteilhaften Weiterbildung der Erfindung eine besonders hohe mechanische Stabilität, wenn bei mehreren Kontakten zumindest einer der Kontakte eine von den übrigen Kontakten von dem Material des Trägers getrennte Ummantelung hat.

Die Verbindung des Trägers mit der Ummantelung gestaltet sich konstruktiv besonders einfach, wenn ein an die Ummantelung angrenzender Bereich des Trägers eine raue Oberfläche aufweist. Ebenfalls können die Kontakte oder die Buchsen aus Stahl eine raue Oberfläche aufweisen.

Die Verbindung zwischen der Ummantelung und dem Träger lässt sich gemäß einer anderen vorteilhaften Weiterbindung der Erfindung zuverlässig abdichten, wenn der an die Ummantelung angrenzende Bereich des Trägers zumindest eine nutartige Ausnehmung hat und wenn ein teil der Ummantelung innerhalb der nutartigen Ausnehmung angeordnet ist. Analog lassen sich auch die Kontakte oder die Buchsen aus Stahl mit der Ummantelung verbinden.

Eine Zugentlastung für die Kontakte gestaltet sich gemäß einer anderen vorteilhaften Weiterbildung der Erfindung konstruktiv besonders einfach, wenn auf dem Träger im Bereich der Kontakte ein Anschlussstück für einen auf den Kontakten aufzusteckenden Stecker befestigt ist. Das Anschlussstück ist vorzugsweise aus Kunststoff gefertigt.

Das Eindringen von Spritzwasser unterhalb des Anschlussstücks könnte zu Kriechströmen zwischen den Kontakten führen. Das Eindringen von Spritzwasser lässt sich gemäß einer anderen vorteilhaften Weiterbildung der Erfindung einfach vermeiden, wenn das an der Außenseite des Kraftstoffbehälters anzuordnende Anschlussstück eine an dem Träger anliegende Elastomerdichtung hat.

Die erfindungsgemäße Einrichtung benötigt besonders wenige zu montierende Bauteile, wenn das an der Außenseite des Kraftstoffbehälters anzuordnende Anschlussstück einen umlaufenden Wulst hat und mit dem Wulst gegen den Träger vorgespannt ist.

Die erfindungsgemäße Einrichtung gestaltet sich konstruktiv besonders einfach, wenn das Anschlussstück stoffschlüssig mit dem Träger verbunden ist. Bei dem aus Metall gefertigten Träger und dem aus Kunststoff gefertigten Anschlussstück lässt sich die stoffschlüssige Verbindung einfach im Spritzgussverfahren bei der Fertigung des Anschlussstücks erzeugen.

Um eine Montageöffnung im Kraftstoffbehälter zu verschließen, kann der Träger in Form eines Verschlussdeckels ausgebildet sein, oder in einen solchen eingeschweißt sein. Zwischen den Verschlussdeckel und den Kraftstoffbehälter ist eine Dichtung angeordnet. Der Verschlussdeckel wird mit dem Kraftstoffbehälter verschraubt.

Zur weiteren Erhöhung der Dichtheit des mit der erfindungsgemäßen Einrichtung versehenen Kraftstoffbehälters trägt es bei, wenn der Träger mit dem Kraftstoffbehälter gasdicht verschweißt oder verlötet ist.

Der Träger hat gemäß einer anderen vorteilhaften Weiterbildung der Erfindung besonders geringe radiale Abmessungen, wenn der Träger hülsenförmig gestaltet ist und einen der Öffnung des Kraftstoffbehälters entsprechenden Außendurchmesser hat.

Zur weiteren Verringerung der Fertigungskosten der erfindungsgemäßen Einrichtung trägt es bei, wenn der Träger plattenförmig gestaltet ist und in die Öffnung des Kraftstoffbehälters hineinragende Zentriermittel hat.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: eine Schnittdarstellung durch eine erfindungsgemäße Einrichtung mit einem plattenförmigen Träger,
- Fig.2: eine weitere Ausführungsform der erfindungsgemäßen Einrichtung,
- Fig.3: eine Schnittdarstellung durch eine erfindungsgemäße Einrichtung mit einem hülsenförmigen Träger.

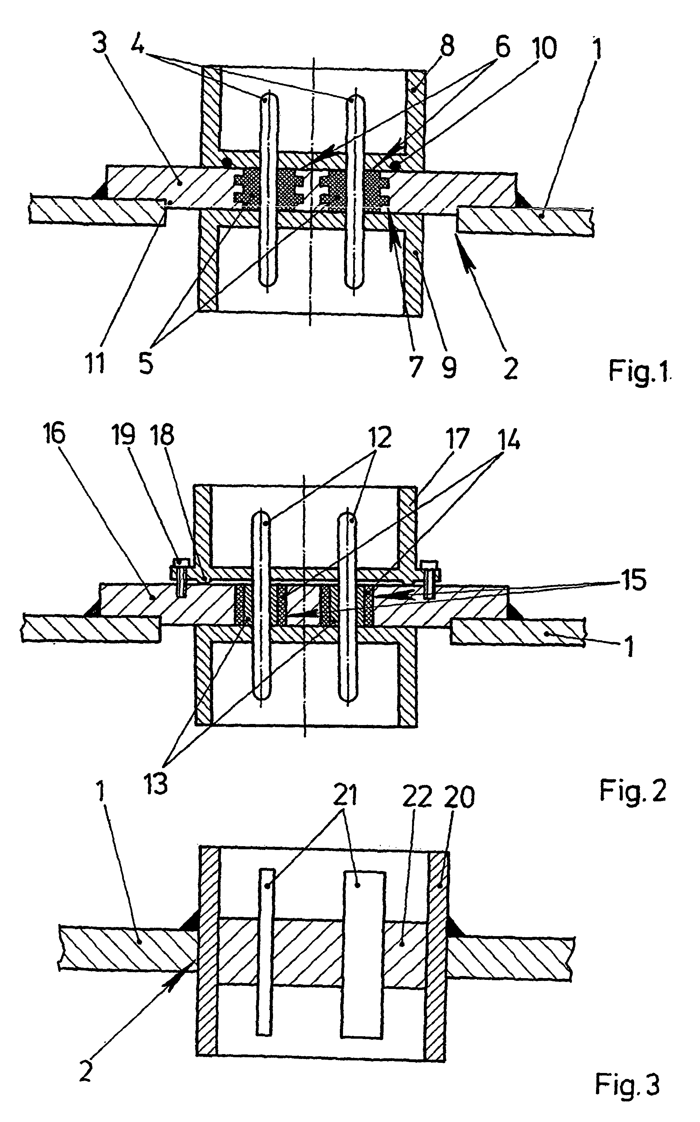

Figur 1 zeigt einen oberen Bereich eines Kraftstoffbehälters 1 für ein Kraftfahrzeug mit einer Einrichtung zur Durchführung von elektrischen Leitungen durch die Wandung des Kraftstoffbehälters 1. Die Einrichtung hat einen in eine Öffnung 2 der Wandung des Kraftstoffbehälters eingesetzten Träger 3. Der Träger 3 ist aus Stahl gefertigt und mit dem ebenfalls aus Stahl gefertigten Kraftstoffbehälter 1 dicht verschweißt. Durch den Träger 3 sind stiftartige Kontakte 4 aus Metall hindurchgeführt. Die Kontakte 4 weisen einen runden Querschnitt auf und dienen beispielsweise zur elektrischen Verbindung einer innerhalb des Kraftstoffbehälters 1 angeordneten Kraftstoffpumpe mit einem Bordnetz des Kraftfahrzeuges oder für einen Anschluss eines im Kraftstoffbehälter 1 angeordneten Füllstandssensors. Die Kontakte 4 weisen jeweils eine Ummantelung 5 aus Glas oder Keramik auf. Der Träger 3 hat zur Aufnahme der Ummantelungen 5 jeweils Durchbrüche 6 mit umlaufenden nutartigen Ausnehmungen 7. Die Ummantelungen 5 dringen in die nutartigen Ausnehmungen 7 ein und sind gasdicht mit dem Träger 3 und mit den Kontakten 4 verbunden. Auf beiden Seiten des Trägers 3 sind Anschlussstücke 8, 9 befestigt. Das auf der Außenseite des Kraftstoffbehälters 1 angeordnete Anschlussstück 8 ist mittels einer ringförmigen Elastomerdichtung 10 gegenüber dem Träger 3 abgedichtet. Die Anschlussstücke 8, 9 sind aus Kunststoff gefertigt und gegen den Träger 3 vorgespannt oder stoffschlüssig mit diesem verbunden. Für seine exakte Ausrichtung gegenüber der Öffnung hat der Träger einen hervorstehenden Zentrierrand 11.

Figur 2 zeigt eine Einrichtung, welche sich von der aus Figur 1 vor allem dadurch unterscheidet, dass Kontakte 12 jeweils in einer Buchse 13 eingesetzt sind. Die Buchsen 13 haben Ummantelungen 14 aus Glas oder Keramik und sind in Durchbrüchen 15 eines mit der Wandung des Kraftstoffbehälters 1 verschweißten Trägers 16 angeordnet. Die Durchbrüche 15 des Trägers 16 haben hier zur Halterung der Ummantelung 14 eine aufgeraute Oberfläche. Weiterhin zeigt Figur 2, dass ein auf der Außenseite des Kraftstoffbehälters 1 angeordnetes Anschlussstück 17 einen umlaufenden Wulst 18 hat, mit dem es gegen den Träger 16 vorgespannt ist. Das Anschlussstück 17 ist mittels Schrauben 19 mit dem Träger 16 verbunden.

Figur 3 zeigt eine Einrichtung zur Durchführung von elektrischen Leitungen durch die Wandung des Kraftstoffbehälters 1, bei der ein in der Öffnung 2 des Kraftstoffbehälters 1 verschweißter Träger 20 hülsenförmig gestaltet ist. Durch den Träger 20 hindurchgeführte Kontakte 21 sind innerhalb des hülsenförmigen Trägers 20 angeordnet und weisen eine gemeinsame Ummantelung 22 aus Glas oder Keramik auf. Die Ummantelung 22 ist mit der Innenseite des hülsenförmigen Trägers 20 dicht verbunden. Die Kontakte 21 weisen einen rechteckigen Querschnitt auf.

## Patentansprüche

1. Einrichtung zur Durchführung von elektrischen Leitungen durch die Wandung eines Kraftstoffbehälters, mit einem in eine Öffnung (2) des Kraftstoffbehälters eingesetzten und diese dichtend abschließenden Träger (3) und mit durch den Träger (3) zu der Außenseite des Kraftstoffbehälters durchgeführten Kontakten (4), wobei der Träger (3, 16, 20) zumindest eine aus Glas oder Keramik gefertigte Ummantelung (5, 14, 22) für die Kontakte (4, 12, 21) hat, **dadurch gekennzeichnet, dass** die Kontakte (12) im Bereich ihrer Ummantelung (14) eine Buchse (13) aus Stahl aufweisen.

2. Einrichtung nach Anspruch 1, **dadurch gekennzeichnet, dass** der Träger (3, 16, 20) aus Metall gefertigt und mit der Ummantelung (5, 14, 22) der Kontakte (4, 12, 21) gasdicht verbunden ist.

3. Einrichtung nach Anspruch 1 oder 2, **dadurch gekennzeichnet, dass** bei mehreren Kontakten (4, 12) zumindest einer der Kontakte (4, 12) eine von den übrigen Kontakten (4, 12) von dem Material des Trägers (3, 16) getrennte Ummantelung (5, 14) hat.

4. Einrichtung nach zumindest einem der vorhergehenden Ansprüche, **dadurch gekennzeichnet, dass** ein an die Ummantelung (14, 22) angrenzender Bereich des Trägers (16, 20) eine raue Oberfläche aufweist.

5. Einrichtung nach zumindest einem der vorhergehenden Ansprüche, **dadurch gekennzeichnet, dass** der an die Ummantelung (5) angrenzende Bereich des Trägers (3) zumindest eine nutartige Ausnehmung (7) hat und dass ein Teil der Ummantelung (5) innerhalb der nutartigen Ausnehmung (7) angeordnet ist.

6. Einrichtung nach zumindest einem der vorhergehenden Ansprüche, **dadurch gekennzeichnet, dass** die Kontakte (4, 12, 21) einen kreisförmigen, ovalen oder rechteckförmigen Querschnitt besitzen.

7. Einrichtung nach zumindest einem der vorhergehenden Ansprüche, **dadurch gekennzeichnet, dass** auf dem Träger (3, 16) im Bereich der Kontakte (4, 12) ein Anschlussstück (8, 9, 17) für einen auf den Kontakten (4, 12) aufzusteckenden Stecker befestigt ist.

8. Einrichtung nach zumindest einem der vorhergehenden Ansprüche, **dadurch gekennzeichnet, dass** das an der Außenseite des Kraftstoffbehälters (1) anzuordnende Anschlussstück (8) eine an dem Träger (3) anliegende Elastomerdichtung (10) hat.

9. Einrichtung nach zumindest einem der vorhergehenden Ansprüche, **dadurch gekennzeichnet, dass** das an der Außenseite des Kraftstoffbehälters (1) anzuordnende Anschlussstück (17) einen umlaufenden Wulst (18) hat und mit dem Wulst (18) gegen den Träger (16) vorgespannt ist.

10. Einrichtung nach zumindest einem der vorhergehenden Ansprüche, **dadurch gekennzeichnet, dass** das Anschlussstück (9) stoffschlüssig mit dem Träger verbunden ist.

11. Einrichtung nach zumindest einem der vorhergehenden Ansprüche, **dadurch gekennzeichnet,dass** der Träger (3, 16, 20) mit dem Kraftstoffbehälter (1) gasdicht verschweißt oder verlötet ist.

12. Einrichtung nach zumindest einem der vorhergehenden Ansprüche, **dadurch gekennzeichnet, dass** der Träger (20) hülsenförmig gestaltet ist und einen der Öffnung (2) des Kraftstoffbehälters (1) entsprechenden Außendurchmesser hat.

13. Einrichtung nach zumindest einem der vorhergehenden Ansprüche, **dadurch gekennzeichnet, dass** der Träger (3, 16) plattenförmig gestaltet ist und in die Öffnung (2) des Kraftstoffbehälters (1) hineinragende Zentriermittel (11) hat.

## Claims

1. Device for ducting electrical lines through the wall of a fuel tank, having a carrier (3) which is inserted into an opening (2) in the fuel tank and closes it off in a sealing fashion, and having contacts (4) which lead through the carrier (3) to the outside of the fuel tank, the carrier (3, 16, 20) having at least one sheath (5, 14, 22) which is fabricated from glass or ceramic, for the contacts (4, 12, 21), **characterized in that** the contacts (12) have a bushing (13) made of steel in the region of their sheath (14).

2. Device according to Claim 1, **characterized in that** the carrier (3, 16, 20) is fabricated from metal and is connected to the sheath (5, 14, 22) of the contacts (4, 12, 21) in a gas-tight fashion.

3. Device according to Claim 1 or 2, **characterized in that**, when there are a plurality of contacts (4, 12), at least one of the contacts (4, 12) has a sheath (5, 14) which is separated from the other contacts (4, 12) by the material of the carrier (3, 16).

4. Device according to at least one of the preceding claims, **characterized in that** a region of the carrier (16, 20) which adjoins the sheath (14, 22) has a rough surface.

5. Device according to at least one of the preceding claims, **characterized in that** the region of the carrier (3) which adjoins the sheath (5) has at least one groove-like recess (7), and **in that** part of the sheath (5) is arranged within the groove-like recess (7).

6. Device according to at least one of the preceding claims, **characterized in that** the contacts (4, 12, 21) have a circular, oval or rectangular-shaped cross section.

7. Device according to at least one of the preceding claims, **characterized in that** a connecting element (8, 9, 17) for a plug which is to be plugged onto the contacts (4, 12) is attached to the carrier (3, 16) in the region of the contacts (4, 12).

8. Device according to at least one of the preceding claims, **characterized in that** the connecting element (8) which is to be arranged on the outside of the fuel tank (1) has an elastomer seal (10) which bears against the carrier (3).

9. Device according to at least one of the preceding claims, **characterized in that** the connecting element (17) which is to be arranged on the outside of the fuel tank (1) has a circumferential bead (18) and is prestressed with respect to the carrier (16) by means of the bead (18).

10. Device according to at least one of the preceding claims, **characterized in that** the connecting element (9) is connected to the carrier in a materially joined fashion.

11. Device according to at least one of the preceding claims, **characterized in that** the carrier (3, 16, 20) is welded or soldered to the fuel tank (1) in a gas-tight fashion.

12. Device according to at least one of the preceding claims, **characterized in that** the carrier (20) is sleeve-shaped and has an external diameter corresponding to the opening (2) in the fuel tank (1).

13. Device according to at least one of the preceding claims, **characterized in that** the carrier (3, 16) is plate-shaped and has centring means (11) which project into the opening (2) in the fuel tank (1).

## Revendications

1. Dispositif p our faire p asser des lignes électriques à t ravers la paroi d'un réservoir de carburant, comportant un support (3) inséré dans u ne ouverture (2) du réservoir de carburant et la fermant hermétiquement, et comportant des contacts (4) dirigés à travers le support (3) vers le côté extérieur du réservoir de carburant, le support (3, 16, 20) possédant au moins un enrobage (5, 14, 22) pour les contacts (4, 12, 21), réalisé en verre ou en matériau céramique, c aractérisé en ce que les contacts (12) comportent une douille (13) en acier dans la région de leur enrobage (14).

2. Dispositif suivant la revendication 1, **caractérisé en ce que** le support (3, 16, 20) est fabriqué en métal et est assemblé de manière étanche aux gaz à l'enrobage (5, 14, 22) des contacts (4, 12, 21).

3. Dispositif suivant la revendication 1 ou 2, **caractérisé en ce qu'**en présence de plusieurs contacts (4, 12), au moins un des contacts (4, 12) porte un enrobage (5, 14) séparé des autres contacts (4, 12) par le matériau du support (3, 16).

4. Dispositif suivant au moins l'une des revendications précédentes, **caractérisé en ce qu'**une région du support (16, 20) qui est limitrophe de l'enrobage (14, 22) possède une surface rugueuse.

5. Dispositif suivant au moins l'une des revendications précédentes, **caractérisé en ce que** la région du support (3) qui est limitrophe de l'enrobage (5) possède au moins un évidement (7) du genre rainure, et **en ce qu'**une partie de l'enrobage (5) est disposée à l'intérieur de l'évidement (7) du genre rainure.

6. Dispositif suivant au moins une des revendications précédentes, **caractérisé en ce que** les contacts (4, 12, 21) possèdent une section circulaire, ovale ou rectangulaire.

7. Dispositif suivant au moins l'une des revendications précédentes, **caractérisé en ce qu'**un élément (8, 9, 17) de raccordement pour un connecteur à enficher sur les contacts (4, 12) est fixé sur le support (3, 16) dans la région des contacts (4, 12).

8. Dispositif suivant au moins l'une des revendications précédentes, **caractérisé en ce que** l'élément (8) de raccordement à disposer sur le côté extérieur du réservoir (1) de carburant possède un joint (10) d'étanchéité en élastomère appliqué contre le support (3).

9. Dispositif suivant au moins l'une des revendications précédentes, **caractérisé en ce que** l'élément (17) de raccordement à disposer sur le côté extérieur du réservoir (1) de carburant possède un bourrelet (18) entourant et est précontraint par le bourrelet (18) contre le support (16).

10. Dispositif suivant au moins l'une des revendications précédentes, **caractérisé en ce que** l'élément (9) de raccordement est assemblé au support par liaison de matière.

11. Dispositif suivant au moins l'une des revendications précédentes, **caractérisé en ce que** le support (3, 16, 20) est assemblé de manière étanche aux gaz au réservoir (1) de carburant par soudage ou par brasage.

12. Dispositif suivant au moins l'une des revendications précédentes, **caractérisé en ce que** le support (20) est réalisé en forme de manchon et possède un diamètre extérieur correspondant à l'ouverture (2) du réservoir (1) de carburant.

13. Dispositif suivant au moins l'une des revendications précédentes, **caractérisé en ce que** le support (3, 16) est réalisé en forme de plaque et possède des moyens (11) de centrage s'enfonçant dans l'ouverture (2) du réservoir (1) de carburant.
